# EUROPÄISCHE PATENTSCHRIFT

(11) **EP 3 108 735 B1**
(45) Veröffentlichungstag und Bekanntmachung des Hinweises auf die Patenterteilung: **15.08.2018**
(21) Anmeldenummer: 16001338.9
(22) Anmeldetag: 14.06.2016
(51) Int. Cl.: A01C 9/00, A01C 21/00, A01C 7/06, A01C 23/02

(54) **VERFAHREN ZUR DÜNGERAUSBRINGUNG IM KARTOFFELANBAU UND DAFÜR VORGESEHENE EINRICHTUNG**
METHOD FOR FERTILIZER APPLICATION FOR POTATO GROWING AND DEVICE FOR SAME
PROCÉDÉ D'ÉPANDAGE D'ENGRAIS SUR CULTURE DE POMMES DE TERRE ET DISPOSITIF ASSOCIÉ

(30) Priorität: 23.06.2015 DE 102015110079
(43) Veröffentlichungstag der Anmeldung: 28.12.2016
(73) Patentinhaber: Grimme Landmaschinenfabrik GmbH & Co. KG, 49401 Damme (DE)
(72) Erfinder: Dettmer, Franz-Josef, 49577 Ankum (DE); Plöger, Werner, 49163 Bohmte (DE)
(74) Vertreter: Pott, Ulrich

(56) Entgegenhaltungen:
- EP-B1- 2 215 903
- WO-A1-2014/183182
- DE-A1-102010 017 127
- DE-B- 1 230 251
- GB-A- 2 176 983
- US-A- 2 071 324
- US-A1- 2014 131 485

## Beschreibung

Die Erfindung betrifft ein Verfahren zur Düngerausbringung im Kartoffelanbau und eine dafür vorgesehene Einrichtung.

In der Landtechnik sind Verfahren und Einrichtungen zur Ausbringung von Dünger auf Ackerböden seit langem bekannt. Dabei wurden im Laufe der Entwicklung von Düngerstreuern zunehmend spezielle Verteilmaschinen entwickelt, die insbesondere an die beim Getreideanbau und die mit diesem verbundene Sätechnik vorliegenden Bedingungen angepasst sind. Aus DE 195 04 703 A1 ist ein Verfahren bekannt, bei dem eine den Dünger ausbringende Verteilmaschine mittels eines Rechner-Systems so gesteuert wird, dass eine vorausberechnete Menge des Düngers je nach Standort und Fläche über die Ackerfläche verstreut werden kann. Dabei wird mittels eines Schleuderdüngerstreuers eine an die Feldrandkontur und die Form des Feldes angepasste Ausbringung durchgeführt, so dass eine optimierte "Flächenverteilung" des Düngers möglich ist. Dabei kann der Dünger - ohne über die Grenzen der Feldkontur hinaus zu gelangen - bedarfsgerecht verteilt werden, so dass innerhalb der Feldkontur ein gleichmäßiges Streubild erzeugt wird und der Dünger mit möglichst konstanter Menge pro Flächeneinheit ausgebracht ist.

Aus DE 198 82 236 T1 ist eine allgemein als landwirtschaftliche Vorrichtung bezeichnete Sämaschinen-Konstruktion bekannt, die zum gleichzeitigen Ausbringen von körnigen Produkten unterschiedlicher Art, beispielsweise Saatgut, Dünger, Grassamen o. dgl. Substanzen in körniger Form, genutzt wird. Dabei werden geschlossene Transportleitungen in Form von Rohren oder Schläuchen verwendet, um die vorzugsweise in mehreren Behältern befindlichen Produktarten in unterschiedlichen Abständen zum Säschar im Boden zu verteilen. Die Verfahrensführung ist dabei auf das Ausbringen von kornförmigen Sämereien gerichtet, so dass auch bei vergleichsweise "ungenauer" Platzierung des Düngers im weitgehend ebenen Boden der Ackerfläche das Wachstum des keimenden Saatgutes in weiten Grenzen schwanken kann. Die bei einer Fruchtbildung erreichbare Anzahl und Größe von an den Halmen oder Stengeln "oberirdisch" sich ausbildenden Körnerfrüchten wird bei dieser bodenseitigen Wurzel-Düngung des Saatgutes gerade nicht gezielt beeinflusst.

Gemäß DE 10 2010 017 127 A1 wird eine zum Ausbringen von Saatkörnern vorgesehen Verteilmaschine beschrieben, bei der die Düngergaben für jedes der Samenkörner in portionierter Weise und in definierten Abständen im ebenen Ackerboden erfolgen. Dabei ist die Verteilmaschine im Bereich zwischen Düngerablageeinrichtung und Dosierorgan mit einer speziellen Portioniereinrichtung versehen, die ansteuerbar und regelbar ausgeführt ist. Auch bei diesem System ist die Dosierung des Düngemittels in weiten Grenzen variabel gestaltet und dabei auf die "Fruchtbildung" ohne Einfluss. Dies ist möglich, da das später als Körnerfrucht am oberirdischen Halm oder Stengel entstehende Ernteprodukt in beliebiger Größe und variabler Anzahl vollständig bei der Getreideernte erfasst und in einer Schüttung verwertet werden kann. Dabei spielen Größen- und Mengenunterschiede im Bereich der auf der jeweiligen Ackerfläche geplanten Körnerfrüchte - beispielsweise bei Gerste, Roggen, Weizen, Hafer oder Mais - eine eher untergeordnete Rolle, da die Getreideproduktion auf einen maximalen Ertrag je Flächeneinheit ausgerichtet ist und beispielsweise nur eine möglichst geringe Stroh-Abfallmenge neben dem Erntegut erzielt werden soll.

Aus DD 252 526 A1 ist eine Vorrichtung zur definierten Tiefenablage von Agrochemikalien bekannt, wobei hier die Ablage von festem und flüssigem Mineraldünger im Boden vorgesehen ist. Bekannt sind in diesem Zusammenhang auch Fliehkraftstreuer für Dünger (DE 60 2004 002 816 T2) sowie Gülleausbringvorrichtungen (DE 60 2006 000 572 T2), die jedoch sämtlich die vorbeschriebenen Nachteile einer "flächendeckenden" Düngung aufweisen und für den Kartoffelanbau wenig geeignet sind.

Bei einer Vorrichtung zum Ausbringen von knollenförmigem Pflanzgut gemäß EP 2 215 903 B1 ist im Zusammenhang mit dem Legen von Saatknollen eine Dünge- und/oder Beizvorrichtung vorgesehen. Dieses Konzept ist lediglich darauf gerichtet, dass neben der Knollenzufuhr in der Legephase auch eine allgemeine Düngemitteleinbringung vorgesehen ist, wobei diese in einzelnen Spuren einstellbar und abstellbar ist. Zur Steuerung des Systems ist auch eine auf die Abmessungen der Ackerfläche gerichtete GPS-Steuereinheit vorgesehen, in deren Speicher zur Steuerung der Maschine nur ein entsprechender Verlauf der geografischen Höhenlinien hinterlegt ist. Die speziellen Bedingungen zum Einbringen von Dünger in den Kartoffeldamm und die damit verbundene Wachstumsbeeinflussung der Saatknollen sind bei dieser Vorrichtung nicht angesprochen. Die US 2 071 324 A offenbart ein Verfahren und eine Einrichtung zur Düngerausbringung im Kartoffelanbau, wobei im Bereich jeweiliger in Kartoffelbeeten einzulegender Saatknollen zumindest ein in Längsrichtung von Kartoffelreihen mehrere Düngelinien bildender Dünger eingebracht wird, wobei ein in seiner Menge variierbarer Dünger teilflächenspezifisch steuerbar dem Nahbereich von Saatknollen zugeführt wird. Die Erfindung befasst sich mit dem Problem, ein Verfahren und eine Vorrichtung zum Ausbringen von Dünger im Kartoffelanbau zu schaffen, womit ausgehend von einer gezielteren Ausbringphase des Düngers in den Bereich von Saatknollen deren optimierte Nährstoffversorgung vorbereitet wird, dabei ein kostenoptimaler Einsatz sowie eine umweltschonende Dosierung des Düngers erfolgt und mit einer an variierende Bodenbedingungen von Ackerflächen anpassbaren Düngerdosierung ein Ernten weitgehend vorausberechenbarer Knollenqualitäten möglich wird.

Die Erfindung löst dieses Problem mit einem Verfahren mit den Merkmalen des Anspruchs 1 sowie einer Einrichtung mit den Merkmalen des Anspruchs 10. Weitere vorteilhafte Ausgestaltungen ergeben sich aus den Ansprüchen 2 bis 9 sowie 11 bis 20. Zur Versorgung von in Kartoffeldämmen einzulegenden Saatknollen ist die Anwendung verschiedener technischer Lösungen bekannt, mit denen zusätzlich zur Saatknolle jeweilige, in Längsrichtung des Kartoffeldamms als eine Linie verlaufende Dünge-Mittel eingebracht werden. Das erfindungsgemäß verbesserte System zeichnet sich in seiner Verfahrensführung dadurch aus, dass ein zumindest in seiner Zusammensetzung, seiner Menge, seiner Konsistenz und/oder seiner Abstandslage zur Saatknolle variierbarer Dünger nunmehr der jeweiligen Bodenqualität der Ackerfläche folgend und dabei teilflächenspezifisch gesteuert dem Nahbereich der eine Verlegelinie bildenden Saatknollen zugeführt wird.

Diese auf eine Optimierung des Wachstums von in einem Kartoffeldamm befindlichen Erdknollen gerichtete Verfahrensführung ist mit Blick auf die allgemein bekannte Dünger- und Beizeausbringung im Kartoffelanbau dadurch verbessert, dass zumindest phasenweise während eines jeweiligen Verlegevorgangs die unterschiedlichsten Bodenstrukturen und -richtwerte von Agrarflächen unmittelbar bewertet werden und der Dünger punktgenau an die Saatknolle angepasst wird. Die jeweiligen Ergebnisse einer GPS-gesteuerten Verfahrensführung im Bereich der Düngerzufuhr werden dann auf eine kompakte Lege-Dünge-Einheit übertragen und individuell im Bereich der jeweiligen Legeorgane berücksichtigt.

Es hat sich gezeigt, dass bereits beim Wechsel von einer Agrarfläche zu einer - auch in geringem Abstand befindlichen - zweiten Agrarfläche unterschiedliche Bodenrichtwerte, beispielsweise beeinflusst durch die klimatischen Bedingungen und/oder Feuchtigkeitsverhältnisse, eine Anpassung von Art und Menge der Düngerzufuhr erforderlich machen können. Dies mit dem Ziel, zumindest ein gleichmäßiges Wachstum der Knollen zu erreichen. Deshalb wird die GPS-gestützt vorbereitete Verfahrensführung in einer jeweiligen Umsetzphase mit neuen Orts- und Flächendaten aktualisiert, und danach kann die Ausbringung des Düngers an die "neue" zweite Verlegesituation angepasst werden.

Eine weitere Ausführung dieser erfindungsgemäß optimalen Düngerausbringung sieht vor, dass nunmehr auf einer einzigen Ackerfläche einzeln zu bewertende Teilflächenabschnitte mit unterschiedlichen Bodenstrukturen und -richtwerten beachtet werden. Dabei kann in vergleichsweise kurzen Intervallen des Verlege- und Düngungsvorgangs eine flexible Anpassung der Düngerausbringung realisiert werden. Dabei wird auf jeweiligen vergleichsweise kleinen "Teilflächen" mit unterschiedlichen Dünge-Segmenten der Düngereintrag erhöht, verringert oder gar abgestellt. Diese teilflächenspezifische Verteilung des Düngers führt zu einer überraschend effektiven Verbesserung der auf gleichmäßiges Erntegut gerichteten Wachstumsbedingungen im Kartoffeldamm, da das GPS-gesteuerte System an die komplexen Bedingungen der Knollen-Damm-Umweltstruktur je Ackerfläche einfach anpassbar ist. Dies ist eine wesentliche Verbesserung der bereits aus der Sätechnik bekannten Düngeverfahren, bei denen nur die maximale Körnerausbeute im Vordergrund steht.

Die erfindungsgemäße Verfahrensführung bei der gesteuerten Düngerausbringung ist auf die spezifischen Bedingungen des Kartoffelanbaus zugeschnitten, da - ausgehend von einer Saatknolle - die "unterirdische" Erzeugung des Erntegutes in Form der Knolle zunehmend an die qualitativen Forderungen der späteren Abnehmer anzupassen ist. Dies betrifft insbesondere Größe und Gewicht als Qualitätskriterium der Ernteknollen.

Es hat sich gezeigt, dass es bei einer Unterversorgung des Kartoffelackers - neben einem Minderertrag - zu Missbildungen an den Knollen kommen kann, und diese weisen eine verminderte Krankheitsresistenz auf. Andererseits kann durch eine Überversorgung eine Übergröße von Ernteknollen mit Missbildungen entstehen, so dass auch hier eine optimale Ernte nicht erzielt wird. Durch den Einsatz des erfindungsgemäß optimierten Düngeablaufs können diese Nachteile vermieden und damit insgesamt die Kosten für den Kartoffelerzeuger gesenkt werden. Neben der Qualitätsverbesserung der Ernteknollen wirkt sich deren gleichmäßige Größe auch vorteilhaft auf den Sortieraufwand aus, da dieser verringert werden kann und so die Aufbereitungskosten gesenkt sind.

Mit der bödenspezifisch und teilflächenspezifisch wirkenden Verlege-Dünge-Einheit wird der Dünger so positioniert, dass im Kartoffeldamm eine optimale Durchwurzelung erreicht wird. Dabei bleibt der in Düngelinien unter und neben der Saatknolle positionierte Dünger über eine lange Wachstumsphase verfügbar, die Bildung grüner Knollen als minderwertiges Erntegut wird durch eine "vorgegebene" Wachstumsrichtung innerhalb des Kartoffeldamms vermieden, und in den Wachstumsphasen können die optimal versorgten Pflanzen Feuchteunterschiede besser tolerieren.

Ausgehend von den in einem elektronischen Steuerungssystem hinterlegbaren flächen- und teilflächenspezifischen Daten sieht das erfindungsgemäß optimierbare System eine in vielen Verfahrensparametern steuerbare Zuführung des Düngers in einer dabei bedarfsgesteuerten Abfolge und mit variierbarer Dünger-Zusammensetzung vor. Dabei wird entsprechend einer auf der Agrarfläche zu verlegenden Sorte von Saatknollen auch eine an diese sortenspezifisch anpassbare und damit wachstumsoptimierte Zuführung von Dünger so durchgeführt, dass bei maximalem Ertrag insbesondere Knollen gleicher Qualität und Abmessung erreicht werden. Eine variabel an die Bodenbeschaffenheit anpassbare erfindungsgemäße Ausführung des gesteuerten Düngerverfahrens sieht vor, dass nunmehr - neben einer Düngung mit nur einem Düngemittel - vorteilhaft ein aus zumindest zwei Düngemitteln gemischter und damit "bodenspezifisch" vorbereiteter Dünger in mehreren Düngelinien in den Bereich des Kartoffeldamms eingebracht wird. Dabei wird umittelbar vor einer steuerbaren Phase der Düngerablage ein optimierter Dünger aus einem variabel vorgebbaren Gemisch von zumindest zwei Düngemitteln aufbereitet. Entlang der dann zu erzeugenden Düngelinien können die jeweiligen Anteile der verwendete Düngemittel in dem Gemisch mit hoher Genauigkeit auf die vorliegenden Bodenrichtwerte abgestimmt werden. So ist es möglich, dass entlang einer der jeweiligen Düngelinien auch Streckenabschnitte mit unterschiedlichen Mischungen des Düngers verteilt werden. Diese Optimierung führt zu einer gleichmäßigen Knollengröße in maximal durchwurzelten Kartoffeldämmen.

Es versteht sich, dass bei dem vorbeschriebenen Verfahren der spezifischen Verteilung im Kartoffeldamm auch Dünger verwendet werden können, die aus mehr als zwei Düngemitteln gemischt sind. Dies betrifft den variablen Einsatz von Dünger-Gemischen, in denen Stickstoff, Kali, Magnesium, Cultan o. dgl. Düngemittel optimal an die teilflächenspezifischen Bedingungen angepasst werden. Denkbar sind dabei variierende Konsistenzen des Düngers, der wahlweise in Form von Granulat, Pellets oder Flüssigdünger bereitgestellt werden kann.

Mit unterschiedliche konstruktive Mittel aufweisenden Einrichtungen kann dazu der die zumindest zwei Düngemittel enthaltende Dünger in einer Austragvorrichtung vorbereitet und zeitnah dem Knollen-Verlegevorgang in den Ackerboden eingebracht werden. Dieser Dünger wird vorteilhaft aus jeweiligen, die Vorratsbehälter verlassenden und einer Dosiereinheit zugeführten Dosierströmen gemischt und als "Einzelstrom" in den Kartoffeldamm eingeführt. Dabei ist vorgesehen, dass dieses in der Dosiereinheit vorbereitete und variabel zusammensetzbare Gemisch als ein entsprechend den Bodenrichtwerten optimierbarerDünger vorbereitet und mittels der konstruktiv anpassbaren Austragvorrichtung auch in mehreren parallelen Düngelinien aufgeteilt und verarbeitet wird.

Dabei wird das System der Austragvorrichtung so mittels einer rechnergestützten Steuereinheit geführt, dass in einer Düngephase gleichzeitig auch mehrere Düngelinien in dem zumindest einen Kartoffeldamm positionierbar sind. Die teilflächenspezifische Anpassung kann dabei vorteilhaft mit einem GPS-System so geführt werden, dass auf der Ackerfläche und/oder auf jeweiligen Teilflächen die jeweils optimale Düngung erreicht ist.

Bei diesem Ausbringvorgang können im Kartoffeldamm insbesondere auch drei Düngelinien erzeugt werden. Vorteilhaft ist vorgesehen, dass mit der Ausbringvorrichtung zumindest eine der Düngelinien als eine Unterfußdüngung unterhalb der Saatknolle positioniert werden kann und damit die Wuchsrichtung der Knollen bildenden Wurzeln unmittelbar beeinflusst ist.

Die komplexe Ausführung der Austragvorrichtung sieht vor, dass das Gesamtsystem als komplexe Einheit mit einer mehrreihigen Legemaschine verbunden wird. Daraus ergeben sich unterschiedliche Verteilsysteme im Bereich der Dosiereinheit. Insbesondere ist diese mit mehreren, den teilflächenspezifisch zusammengesetzten Dünger aus dem jeweiligen Mischer übernehmenden Zuführsystemen versehen. Diese Zuführsysteme im Bereich der Gesamteinheit können in Anpassung an die vorliegenden konstruktiven Voraussetzungen mit variierbaren, anpassbaren Werkzeugen versehen sein. Denkbar sind dabei neben der einfachen Ausführung eines Führungstrichters auch jeweilige Anwendungen in Form eines Zellenrades, einer Förderschnecke, einer Förderkette, einer Pumpe oder eines entsprechend steuerbaren Ventils. Es versteht sich, dass der die jeweiligen Düngemittel aufnehmende Mischer zur optimalen Düngeraufbereitung mit einem elektrisch, pneumatisch oder hydraulisch angetriebenen Mischorgan versehen sein kann.

Die komplexe Aggregateanordnung im Bereich der als mehrreihige Legemaschine ausgebildeten Lege-Dünge-Einheit sieht vor, dass die im Bodenbereich vorzugsweise vor einer Formung des Kartoffeldamms wirksame Austragvorrichtung mit mehreren, den dosierbaren Dünger aufnehmenden und in einer jeweiligen Düngelinie verteilenden Einbringwerkzeugen versehen wird. Eine vergleichsweise einfache Ausführung sieht vor, dass die Austragvorrichtung als jeweiliges Einbringwerkzeug eine die Bauteile an sich bekannter Furchenzieher nutzende Konstruktion aufweist. Dabei sind Konstruktionen in Form eines Schars, eines Zinkens, einer Lanze, eines Rades und/oder einer Scheibe denkbar.

Der kompakte Aufbau in diesem Bereich sieht vor, dass das Einbringwerkzeug und die Furchenzieher für die Saatknollen auch eine variabel aufbaubare Baueinheit bilden können. Insbesondere ist vorgesehen, dass das Einbringwerkzeug in den Bereich des für die Saatknollen vorgesehenen Furchenziehers so integriert ist, dass in einer geschlossenen Bauweise eine optimale Düngerpositionierung erfolgt.

Ausgehend davon, dass die Austragvorrichtung insgesamt als eine verlagerbar und einstellbar in die Konstruktion integrierte Einheit ausgebildet werden kann, ist insbesondere vorgesehen, dass jeweilige Teile des Zuführsystems auf variabel vorgebbare Positionen im Kartoffeldamm eingestellt werden können. Das Zuführsystem bildet dabei das letzte Glied einer im Vorratsbehälter beginnenden Dünger-Zuführstrecke, so dass im Bereich des bodennahen Zuführsystems mit vergleichsweise einfachen Mitteln jeweilige Längen-, Tiefen- und/oder Seitenverstellungen in Bezug auf die im jeweiligen Kartoffeldamm verlaufende Verlegelinien der Saatknollen möglich sind.

Insbesondere ist vorgesehen, dass das Zuführsystem so variabel einstellbar ist, dass auch jeweilige, entlang einer Düngelinien einzubringende Düngernester - in Bezug zur Verlegelinie der Saatknollen - mit seitlichem und/oder vertikalem Abstand positioniert werden.

Weitere Einzelheiten und vorteilhafte Ausgestaltungen ergeben sich aus der nachfolgenden Beschreibung und den Zeichnungen, in denen mehrere Ausführungsbeispiele des erfindungsgemäßen Verfahrens und der Einrichtung näher veranschaulicht sind. In der Zeichnung zeigen:
- Fig. 1: eine perspektivische Gesamtdarstellung eines mit einer Einrichtung zur Düngerausbringung im Kartoffelanbau zusammenwirkenden Legeaggregates, nach dem Stand der Technik,
- Fig. 2: eine Seitenansicht des Systems gemäß Fig. 1,
- Fig. 3: eine perspektivische Prinzipdarstellung eines Kartoffeldamms mit das erfindungsgemäße Verfahren zur Düngerausbringung verdeutlichender Verlegelinie und dieser zugeordneten Düngelinien,
- Fig. 4: eine die variierbaren Abstände der Düngelinien zur Saatknolle verdeutlichende Stirnansicht des Kartoffeldamms gemäß Fig. 3,
- Fig. 5 bis Fig. 7: jeweilige Ausschnittsdarstellungen in Unter-, Seiten- und Vorderansicht, die eine zur Lege-Dünge-Einheit gemäß Fig. 2 gehörende Einrichtung zur Düngerausbringung mit einer ersten Ausführung einer bodenseitigen Austragvorrichtung zeigen,
- Fig. 8 bis Fig. 10: eine zweite Ausführung von Bauteilen im Bereich der Austragvorrichtung ähnlich Fig. 5,

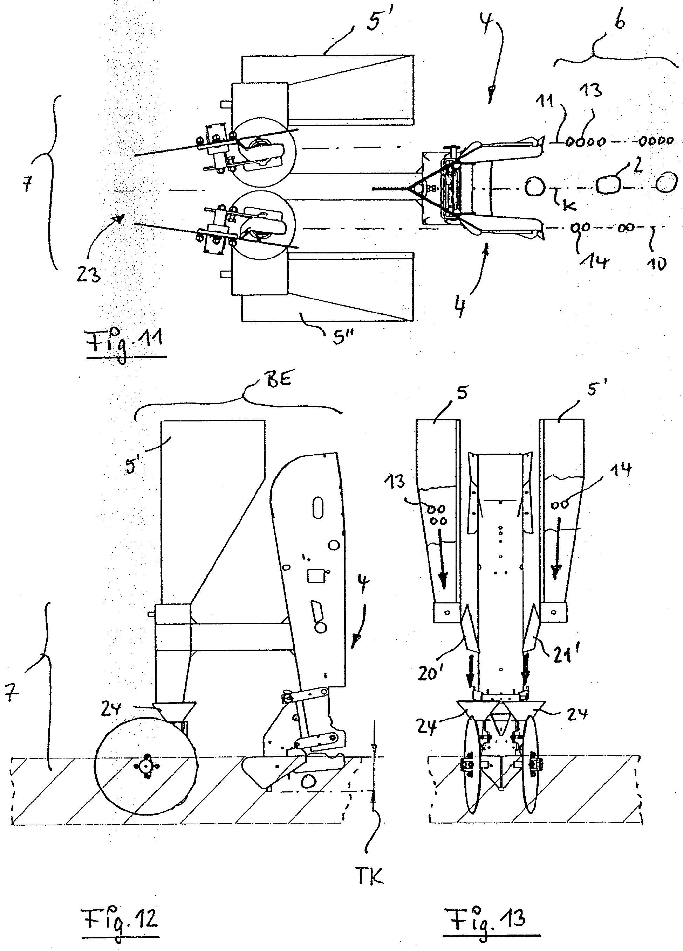

- Fig. 11 bis Fig. 13: eine nicht erfindungsgemäße Ausführung der Austragvorrichtung ähnlich Fig. 5,
- Fig. 14 bis Fig. 16: eine vergrößerte Einzeldarstellung in Unter-, Seiten- und Vorderansicht des im Bereich der Austragvorrichtung vorgesehenen bodennahen Zuführsystems mit Zuleitungen,
- Fig. 17 bis Fig. 19: eine zweite Ausführung des Zuführsystems ähnlich Fig. 14,
- Fig. 20 bis Fig. 22: eine dritte Ausführung des Zuführsystems ähnlich Fig. 14,
- Fig. 23 bis Fig. 25: eine vierte Ausführung des Zuführsystems ähnlich Fig. 14, und
- Fig. 26: eine schematische Darstellung der bei der Düngerausbringung zusammenwirkenden Systemkomponenten.

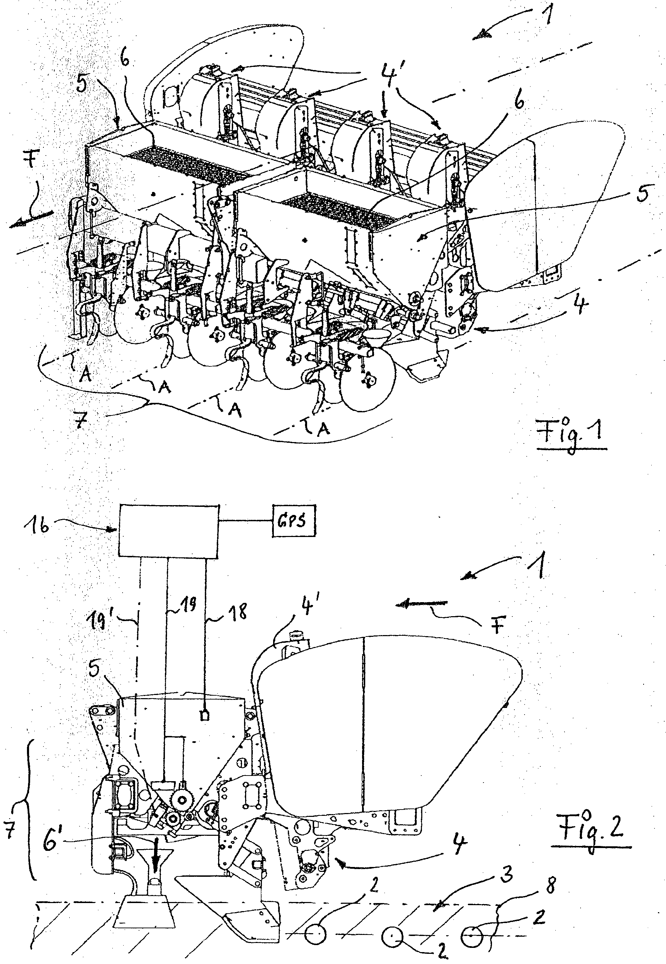

In Fig. 1 ist eine insgesamt mit 1 bezeichnete und in dieser Ausführung bereits bekannte, vergleichsweise einfach aufgebaute Einrichtung zur Düngerausbringung in der Legephase beim Kartoffelanbau gezeigt. Das zur Bewegung in Arbeitsrichtung F vorgesehene Stütz- und Transportsystem in Form einer Zugmaschine o. dgl. ist nicht näher dargestellt.

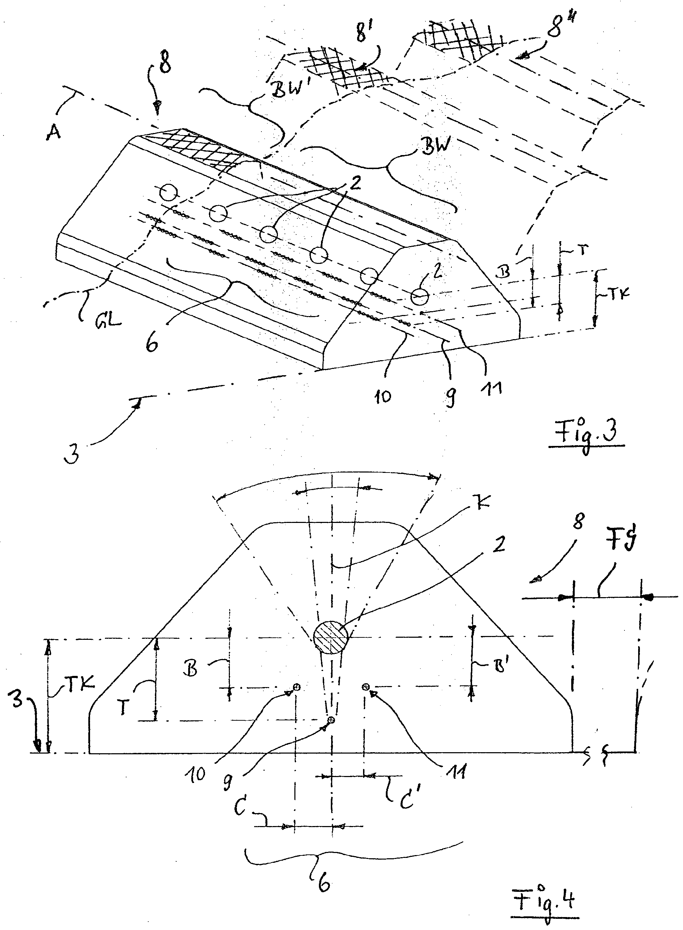

Die Einrichtung 1 ist mit einem jeweilige Saatknollen 2 dem Ackerboden 3 (Fig. 2) zuführenden, insgesamt mit 4 bezeichneten Legeaggregat versehen, das mit vier gleichartigen Becherförderern 4' ausgerüstet ist. Die Einrichtung 1 bildet damit eine Lege-Dünge-Einheit, bei der in zumindest einem jeweiligen Vorratsbehälter 5 bereitstellbarer Dünger 6 mittels einer sich bödennah erstreckenden Austragvorrichtung 7 in den Bereich des Kartoffeldamms 8 (Fig. 3, Fig. 4) ausgebracht wird.

Mit dieser bekannten Einrichtung 1 können die im Bereich jeweiliger paralleler Kartoffeldämme 8, 8', 8" (Fig. 3) von Agrarflächen 3 einzulegenden Saatknollen 2 zusätzlich mit einem allgemein mit 6 bezeichneten Dünger versorgt werden. Dieser in Längsrichtung A des Kartoffeldamms 8 (Fig. 3) eine jeweilige Düngelinie 9, 10 und/oder 11 bildende Dünger 6 kann in flüssigem, gasförmigem und/oder festem Zustand eingebracht werden. Bisher wird in dem bzw. den Vorratsbehälter(n) 5 eine auf die Anzahl der vorgesehenen Kartoffeldämme 8 (im dargestellten Beispiel: die Kartoffeldämme der vier Becher-Leger 4') ausgerichtete Dünger-Menge bereitgestellt. Diese im Vorratsbehälter 5 in nur einer geplanten Zusammensetzung vorliegende Mischung wird direkt in den jeweiligen Kartoffeldamm 8 eingeleitet (Pfeil 6', Fig. 2). Auf einer zu bestellenden Ackerfläche kann es deshalb - beispielsweise durch eine ungenaue Einstellung der Mischung und der Menge des kontinuierlich auszufördernden Düngers 6 - zu Überdüngungen kommen. Neben nachteilig hohen Kosten und ungewollten Übergrößen der Ernteknollen führt dieser ungesteuerte Düngereintrag auch zu nachteiligen Umweltbelastungen bei der Knollenpröduktion. Ausgehend von dieser als allgemein bekannt einzuschätzenden Verfahrensführung beim Düngen - mit dem vorbeschriebenen Basiskonzept gemäß Fig. 1 und Fig. 2 - ist die erfindungsgemäß verbesserte Düngerausbringung im Bereich eines Kartoffeldamms 8 darauf gerichtet, dass entsprechend den speziellen Verlegeabläufen im aus aufbereiteten Bodenstrukturen gebildeten Kartoffeldamm 8 nunmehr ein zumindest in seiner Zusammensetzung, seiner Menge, seiner Konsistenz und/oder seiner Abstandslage zur Saatknolle 2 variierbarer Dünger 6 als bodengerechtes Zusatzmittel gezielter vorbereitet wird. Dieser optimierte Dünger 6 kann dann in einer variabel vorgebbaren Ausbringphase des jeweiligen "Lege-Zyklus" in den auf ein sortengerechtes Abstandsmaß optimierbaren Nahbereich von Saatknollen 2 zugeführt werden.

Dieser als Mehr-Komponenten-Mischung zeitnah vorbereitete Dünger 6 wird dabei teilflächenspezifisch an den Ackerboden 3 angepasst. Unter Bildung jeweiliger, im Kartoffeldamm 8 verlaufender Düngelinien kann der Dünger 6 mittels weitgehend automatisch steuerbarer Maschinen- und Austragkomponenten als eine optimierbare Substanz punktgenau im Kartoffeldamm 8 verteilt werden.

Das erfindungsgemäße Verfahren zeichnet sich dadurch aus, dass zumindest phasenweise während eines - mit der gesteuerten Ausbringung des Düngers 6 kombinierbaren - Verlegevorgangs der Saatknollen 2 (Fig. 2) unterschiedliche Bodenstrukturen und -richtwerte in Kartoffeldämmen 8 von Agrarflächen 3 berücksichtigt werden. In Fig. 3 sind diese unterschiedlichen Bodenstrukturen schematisch in einem Kartoffeldamm 8 dargestellt, wobei die Richtwerte BW und BW' beispielsweise zwei Bodenzonen unterschiedlicher Bodenqualität verdeutlichen (jeweils kreuzweise schraffierter Bereich als zweite Zone; bis zu einer als Grenzlinie GL definierten Übergangszone). Mit der erfindungsgemäßen Verfahrensführung kann nunmehr bereits in vergleichsweise kleinen, in den Bodenwerten BW, BW' unterschiedlichen Zonen auf einem Acker eine teilflächenspezifische Düngung realisiert werden. In Fig. 3 sind dabei die nebeneinander angeordneten Kartoffeldämme 8, 8', 8" mit dem jeweiligen Bodenrichtwert BW (beispielsweise: lehmhaltiger Boden) bzw. BW' (beispielsweise: Boden mit erhöhtem Sandanteil) schematisch gezeigt.

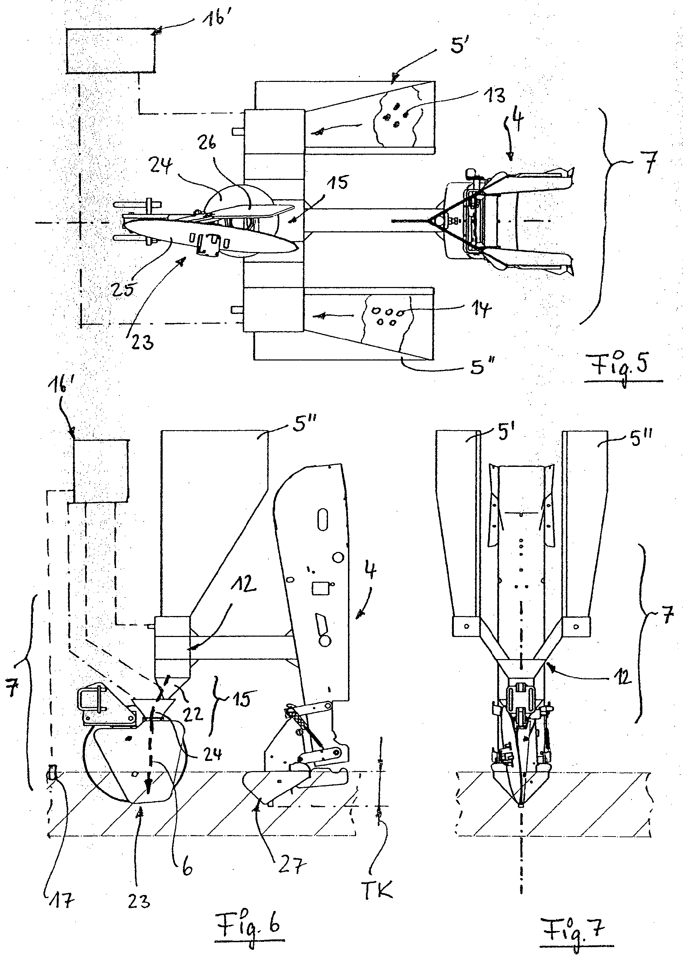

Die erforderlichen Bewertungs-Daten für den Bereich beidseits der Grenzlinie GL - als Übergang von einer Zone in eine andere Zone - können dabei über vorliegende oder aktuell erfassbare, in eine GPS-Steuerung der Verfahrensführung integrierbare Messwerte für die vorliegenden Ackerflächen vorgegeben werden. Ebenso ist vorgesehen, dass im Bereich von örtlich beabstandeten Ackerflächen zum Kartoffelanbau die entsprechenden Bodenrichtwerte ausgewertet werden. Danach kann beim Umsetzen der Lege-Dünge-Einheit 1 von einer Fläche zur anderen Fläche die spezifische Anpassung des variierbaren Düngekonzeptes erfolgen. Das neue Düngerkonzept für Saatknollen 2 sieht auch vor, dass eine direkte Erfassung der Bodenqualität, beispielsweise mittels eines der Einrichtung 1 zugeordneten Sensors 17, erfolgt und davon ausgehend mittels einer Steuereinheit 16 der optimale Düngeraustrag im Bereich der Behälter-Austrag-Einheit 5, 7 punktgenau möglich ist (Fig. 6).

Aus einer Zusammenschau der schematischen Darstellung gemäß Fig. 2 mit einer ersten Ausführung der Wirkkomponenten des neuen Systems (gemäß Fig. 5 bis Fig. 7) wird deutlich, dass hier die eine Austragvorrichtung 7 für den Kartoffeldamm 8 eine - mit zumindest zwei als Speicher zusammenwirkenden Vorratsbehältern 5', 5" verbindbare - Dosiereinheit 12 aufweist (Fig. 6). In dieser Dosiereinheit 12 kann der aus zumindest zwei - im einfachsten Fall auch gleichen - Düngemitteln 13 und 14 mischbare Dünger 6 vorbereitet und als die zumindest eine der Düngelinien 9, 10 oder 11 ausgebracht werden (Mehr-Linien-Darstellung gemäß Fig. 3; Einzellinie nicht dargestellt).

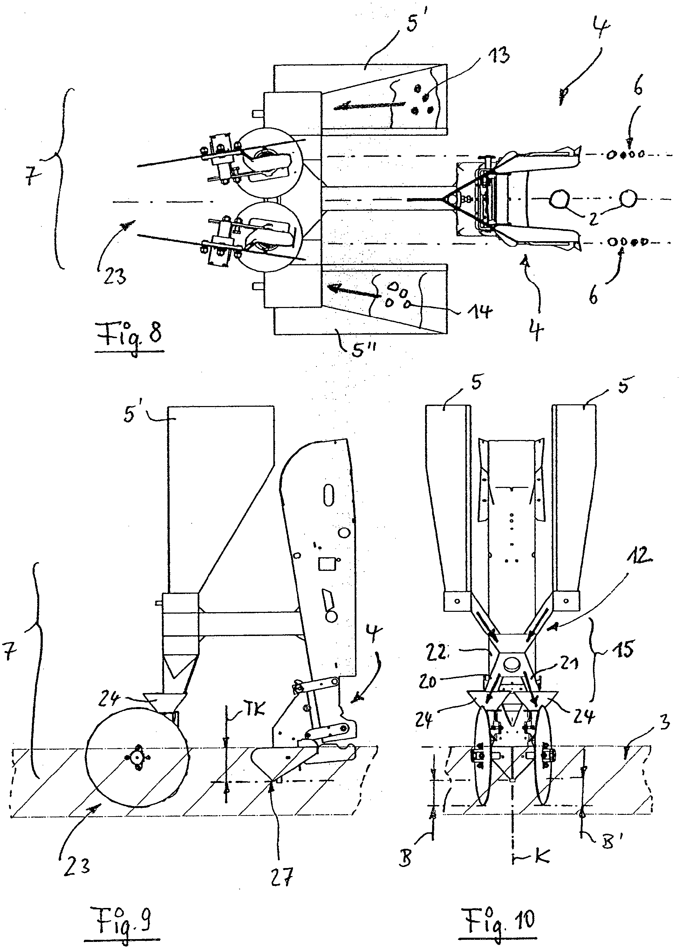

Zum Erreichen mehrerer der Düngelinien kann der Dünger 6 über ein diesen aufteilbar erfassendes Zuführsystem 15 in den Bereich des Kartoffeldamms 8 überführt werden (Fig. 8 bis Fig. 10: mit zwei Ausgängen 20, 21 aus einem Mischer 22 der Dosiereinheit 12). Bei der den Stand der Technik abbildenden Einrichtung 1 gemäß Fig. 1 und Fig. 2 ist zwar eine Steuereinheit 16 vorgesehen, jedoch weist diese im jeweiligen Vorratsbehälter 5 nur einen als Austragkontrolle vorgesehenen Füllstandssensor 18 auf. Die jeweiligen gesteuerte Austragorgane 19, 19' können zwar mittels der Steuerung 16 - beispielsweise in der Austraggeschwindigkeit - beeinflusst werden, aber in sämtlichen Kartoffeldämmen 8 wird nur ein "einheitlicher" Dünger eingebracht. Damit sind Unter- bzw. Überdüngungen mit dem "einheitlichen" Dünger 6 auf unterschiedlichen Bodenqualitäten unvermeidbar. Beim Ernten schwankt dann die Qualität der Ernteknollen, so dass für die anschließende Verarbeitung der gesammelten Knollen ein zeit- und kostenintensiver Aufbereitungs- und Sortiervorgang erforderlich ist.

Bei der in der Legephase eingesetzten, auf gleichmäßige Ernteknollen gerichteten Misch-Verfahrens-Führung beim Düngereinsatz kann mittels einer verbesserten, rechnergestützten Steuereinheit 16' (Fig. 5, Fig. 6) ein entsprechend den Bodenparametern auf die Gleichmäßigkeit des Wachstums gerichteter direkter Austrag eines gemischten Düngers 6 erfolgen. Dabei ist vorgesehen, dass eine jeweilige optimal gesteuerte Mischung der Düngemittel 13, 14 - beispielsweise im Verhältnis der Komponenten von 2:1, 3:1 oder ähnlich - unmittelbar in der Legephase möglich ist. In Fig. 5, Fig. 8 sind mit jeweiligen Kreiskonturen und Punktdarstellungen unterschiedliche Düngemittel 13, 14 beispielhaft "aufgeteilt", so dass die Wirkung der Steuerung 16' am Verlegebild deutlich wird. Das System ist insbesondere so steuerbar, dass jeweils die Zusammensetzungen der in mehreren Düngelinien 9, 10 und 11 vorliegenden Düngeranteile boden- und knollenspezifisch variiert werden können. Erste Tests haben gezeigt, dass das System im Bereich der mit den zusätzlichen Steuerkomponenten verbesserten Lege-Dünge-Einheit 1 eine Vielzahl von teilflächenspezifisch anpassbaren Einstellungen ermöglicht. Damit kann - auch kurzzeitig während einer Legephase - auf jeweils wechselnde Verhältnisse der Bodenrichtwerte BW, BW' eines Ackerbodens 3 schnell reagiert werden.

Die Prinzipdarstellungen zur verfahrensgemäßen Positionierung des aus mehr als zwei Düngemitteln mischbaren Düngers 6 in Fig. 3 und Fig. 4 verdeutlichen, dass der entsprechend den Bodenrichtwerten BW, BW' optimierbare Dünger 6 vorteilhaft in den drei Düngelinien 9, 10 und 11 ausgebracht ist. Diese werden dabei in optimierbaren Abständen zur Saatknolle 2 im Kartoffeldamm 8 positioniert. In Fig. 4, rechte Seite, ist mit einem Abstandsmaß FS die Ausbildung einer Fahrspur zwischen zwei benachbarten Kartoffeldämmen oder -beeten angedeutet. Die Komponenten zur Steuerung der Düngemittelzufuhr können speziell auf diese Fahrspur FS eingestellt werden. Es hat sich gezeigt, dass in diesem Bereich FS die jeweiligen "innen liegenden" Düngelinien 10 oder 11 jeweils geringere Mengen von Düngemittel erfordern und entsprechend ausgebracht werden können. Die von den Arbeitsmaschinen verfestigten Bereiche der Fahrspur FS können beispielsweise Regenwasser speichern und verbessert in die seitlich angrenzenden Flanken des Kartoffeldamms 8 leiten, so dass hier das Knollenwachstum "automatisch" durch langzeitigeren Feuchteeintrag verbessert ist und eine zu große Düngermenge zu ungewollt starkem Pflanzen- und Knollenwachstum führen kann.

Mit Blick auf weitere, zur Umsetzung der Verfahrensvarianten vorgesehene Aggregate-Kombinationen gemäß Fig. 8 bis Fig. 10 wird deutlich, dass der insgesamt mit 6 bezeichnete Dünger mit den Bestandteilen 13, 14 vorteilhaft so verteilt wird, dass die beiden "seitlichen" Düngelinien 10 und 11 mit einem Tiefenabstand B, B' zur zentralen Saatknolle 2 gebildet werden. Gleichzeitig wird bei dieser Austrag-Verlege-Variante ein seitlicher Abstand C, C' zur Knollenlinie K definiert, so dass eine zentrale Lage der Knollen-Dünger-Einheit im Kartoffeldamm 8 vorgegeben ist und optimale Wachstumsbedingungen erzeugt werden.

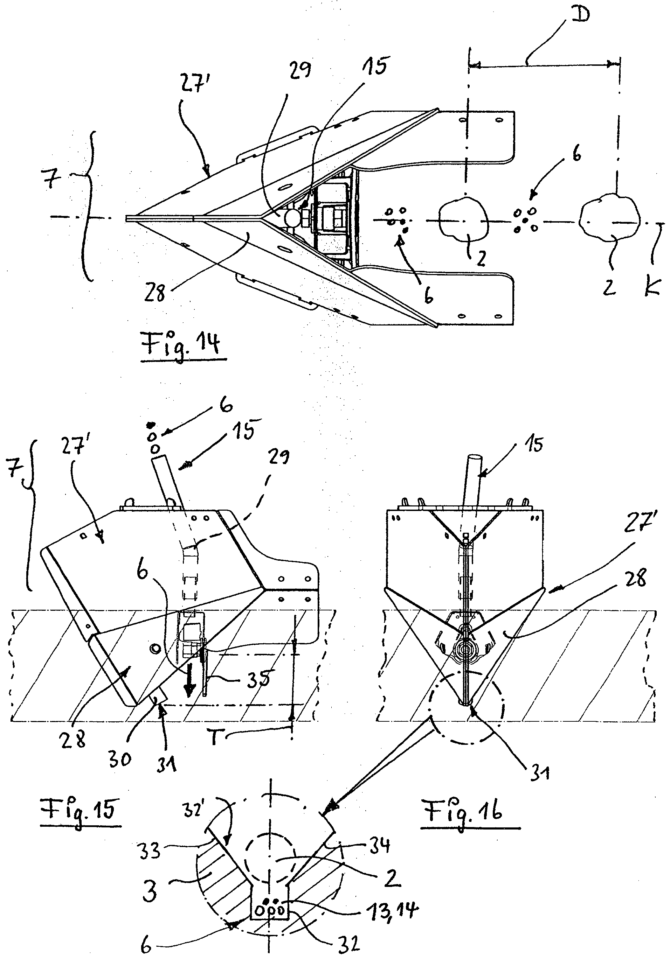

Eine weitere Ausführung des Systems sieht eine gesteuerte Unterfuß-Düngung vor. Dazu wird eine Düngelinie 9 erzeugt, die in zentraler Tiefenlage gemäß Abstand T in der Ebene der Knollenlinie K verläuft. Zur Erzeugung der Düngelinie 9 sind beispielsweise die in Fig. 14 bis Fig. 16 bzw. Fig. 17 bis Fig. 19 gezeigten Ausführungen von Austragvorrichtungen 7 nutzbar.

Zusätzlich zu diesen durch Abstandslagen definierten Positionen des Düngers 6 ist vorgesehen, dass - wie bereits beschrieben - die Dosierströme der in der Dosiereinheit 12 vereinigten Düngemittel 13, 14 anhand der bodenspezifischen Parameter als der "bedarfsgerechte" Dünger 6 zusammengeführt werden. Dieser wird darin vorzugsweise in den drei Düngelinien 9, 10, 11 - auch mit variablen Abständen zur zentralen Knollenlinie K (Fig. 4) - in den zumindest einen Kartoffeldamm 8, 8', 8" eingebracht. Mit dieser bevorzugten Ausführung eines komplexen Ablegesystems gemäß Fig. 4 - wobei während der Ablage des Düngers 6 in Relation zur Knollenlinie K jeweils zwei seitlich parallele Düngelinien 10, 11 und eine parallel sowie vertikal (Abstand T) beabstandete Düngelinie 9 im Kartoffeldamm 8 gebildet werden - ergibt sich eine vorausberechenbare Optimierung von "Wachstumsrichtungen" der wurzelnden Saatknolle 2. Damit können zentral im Kartoffeldamm 8 im Wesentlichen gleich große Ernteknollen erzeugt werden. Ein unerwünschter Austritt von heranwachsendem Erntegut über die Dammränder hinaus (und damit verbundener Grünwuchs) ist zuverlässig vermeidbar.

Eine weitere Optimierung der Verfahrensführung bei der Düngerausbringung in Kombination mit dem Legevorgang ist in Fig. 4 prinzipiell gezeigt. Hier wird - mit jeweiligen Winkelangaben gemäß Einlagespaltweite W für den Dünger 6 und gemäß Einlagespaltmaß W' für die Ablage der Kartoffelknolle - angedeutet, dass die möglichen Bewegungen des Ackerbodens jeweils in Relation zum geplanten oder erforderlichen Ablegepunkt zu betrachten sind. Diese geometrischen Bedingungen im Aufbau des Kartoffeldamms 8 können sich aus der unmittelbaren Abfolge der im Bereich der Austragvorrichtung 7 und des nachgeordneten Legeaggregates 4 vorgesehenen Werkzeuge ergeben.

Ausgehend von dem bereits beschriebenen System gemäß Fig. 5 bis Fig. 7 - bei dem die Dosiereinheit 12 ein den teilflächenspezifisch im Bereich des Mischers 22 zusammengesetzten Dünger übernehmendes Zuführsystem 15 aufweist - ist vorgesehen, dass dieses Zuführsystem 15 mit zumindest einem antreibbaren Werkzeug (und mittels der Steuereinheit 16' beeinflussbaren) in Form eines Führungstrichters 24, eines Zellenrades, einer Förderschnecke, einer Förderkette, einer Pumpe oder eines Ventils versehen wird. Auch im Bereich des Mischers 22 ist die Anordnung variabel ausführbarer Mischorgane (nicht dargestellt) denkbar. Diese wahlweise mit einem elektrischen, pneumatischen oder hydraulischen Antrieb versehenen Organe können ebenfalls über die Steuerung 16' beeinflusst werden.

Ein vergleichsweise einfaches Konzept der im Bodenbereich vor der Formung des Kartoffeldamms 8 wirksamen Austragvorrichtung 7 gemäß Fig. 5 bis Fig. 7 ist darauf abgestellt, dass hier nur ein den aus den Vorratsbehältern 5, 5' gesteuert eingeleiteten Dünger 6 aufnehmendes Einbringwerkzeug 23 vorgesehen ist. Dieses unterhalb des Zuführsystems 15 im Bereich des Führungstrichters 24 angeordnete Einbringwerkzeug 23 weist dabei die wesentlichen Bauteile eines an sich bekannten Furchenziehers auf, wobei dieser in Form einer Scheibe 25 und eines Leitbleches 26 ausgebildet ist. Denkbar ist dabei auch, dass Einbringwerkzeuge 23 in Form eines Schars, eines Zinkens, einer Lanze, eines Rades und/oder einer profilierten Scheibe (nicht näher dargestellt) in das System integriert werden.

Eine technische Optimierung des Systems sieht vor, dass die Bauteile im Bereich des Einbringwerkzeugs 23 bzw. der Austragvorrichtung 7 und des nachgeordneten Furchenziehers 27 für die aus dem Legeaggregat 4 ausgeförderten Saatknollen 2 (Fig. 6) eine kompakte Baueinheit BE bilden. Dabei ist auch eine weitgehende Integration des Einbringwerkzeugs 23 in den Bereich des Furchenziehers 27 denkbar.

Ein wesentlicher technischer Vorteil für die variable Einsetzbarkeit des Ausbring-Lege-Systems ist dadurch erreichbar, dass das Zuführsystem 15 insgesamt oder im Bereich einzelner Baugruppen auf jeweilige Positionen - Fig. 3, Fig. 4 - im Kartoffeldamm 8 einstellbar ausgeführt wird. Damit können die gemäß Fig. 4 beispielhaft vorgegebenen Abstandsmaße im Bereich der Positionen des Düngers 6 mit den Tiefen- und Abstandsmaßen B, B', C, C' und T ebenso variiert werden wie die jeweilige Tiefenposition TK der Saatknolle 2 im Bereich des Furchenziehers 27.

Eine weitere konstruktive Gestaltung der mittels GPS und Computer steuerbaren Düngeautomatik sieht vor, dass das Zuführsystem 15 im Bereich der Dosiereinheit 12 und der aus dem Mischer 22 ausfördernden Bauteile ebenfalls als variabel einstellbare Struktur aufgebaut ist. Dabei sind Steuerungs-Varianten denkbar, mit denen entlang einer der Düngelinien 9, 10, 11 jeweilige einbringbare Düngenester - auch mit unterschiedlicher Zusammensetzung der Düngemittel 13, 14 - positioniert werden können (Fig. 8, rechte Seite). Diese Düngenester sind in Bezug zur Verlegelinie K der Saatknolle 2 mit seitlichem und/oder vertikalem Abstand so positionierbar, dass vergleichbar mit der in Fig. 4 dargestellten Ausführung variierende Gemische (Fig. 8) zu beiden Seiten der Saatknolle 2 wirksam werden. Ebenso ist vorgesehen, dass der Dünger 6 auch in Richtung der Knollenlinie K gleichebenig mit den Saatknollen 2 in einer zwischen diesen befindlichen Lage positioniert wird, so dass die Wurzelbildung in horizontaler Richtung verbessert ist.

In den Darstellungen gemäß Fig. 14 bis Fig. 16 ist eine Ausbringvorrichtung 7 im Bereich eines Furchenziehers 27' dargestellt, wobei in diesen Furchenzieher 27' ein spezieller Düngerschar 28 integriert ist. Der über das ein Leitrohr 29 aufweisende Zuführsystem 15 eingeleitete Dünger 6 wird hier als "Unterfuß-Düngung" genutzt. Im Bereich der Düngerschar 28 ist ein als Dorn 30 ausgebildetes Formelement 31 so angeordnet, dass eine tief liegende Rinne 32 mit im Wesentlichen rechteckigem Querschnitt ausgeformt wird (vergrößerte Darstellung gemäß Fig. 16).

An diese Profilierung 32 jeweils seitlich anschließend wird - mit dem Düngerschar 28 - eine zur Aufnahme der Saatknolle 2 vorgesehene Profilierung 32' geformt. Ersichtlich sind die geometrischen Verhältnisse so aufeinander abgestimmt, dass die Saatknolle 2 nicht in die rechteckige Rinne 32 rutschen kann. Vielmehr liegt die Saatknolle 2 im Bereich von Formschrägen 33, 34 so an, dass eine optimal einstellbare Lage der Unterfuß-Düngung 6 erreicht wird.

Aus der Unteransicht gemäß Fig. 14 wird deutlich, dass bei dieser Einbringvariante die punktuelle Anordnung des Düngers 6 auch so gesteuert werden kann, dass zwischen den einen Längsabstand D aufweisenden Knollen 2 ein jeweiliger Vorrat an Düngemitteln entlang der Knollenlinie K positioniert ist. Um diese punktgenaue Platzierung des Düngers 6 zu verbessern, ist am Ende des Leitrohres 26 (im unteren Bereich des Fallweges) ein als Rückhalter wirkendes Führungselement 35 vorgesehen (Fig. 15).

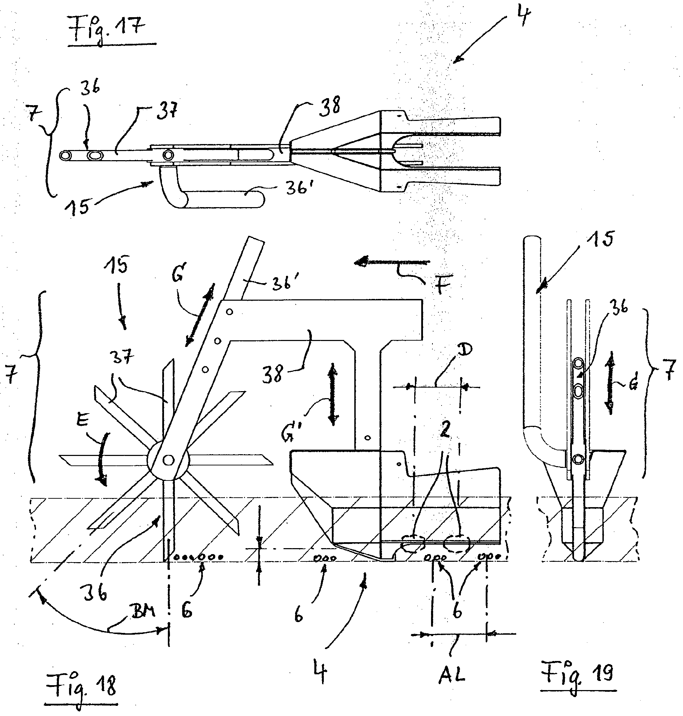

In Fig. 17 bis Fig. 19 ist eine weitere denkbare Ausführungsform der Austragvorrichtung 7 in Kombination mit den bodenseitigen Bauteilen des Legeaggregates 4 dargestellt. Die schematische Darstellung zeigt ein als Injektionsrad 36 ausgebildetes Zuführsystem 15, dessen jeweilige Zuführrohre 37 entsprechend der Fahrtrichtung F drehbar (Pfeil E) ausgeführt sind. Dabei ist ein jeweiliges Bogenmaß BM so auf die Abstandslage AL der Düngenester abgestimmt (Fig. 18), dass die ein Abstandsmaß D aufweisenden Saatknollen 2 in die - bereits in Fig. 14 dargestellte - "Zwischenlage" verbracht werden können. Es versteht sich, dass die variable Einstellbarkeit des Systems eine mögliche Verstellung des Injektionsrades 36 in Pfeilrichtung G aufweisen kann. Über einen Querbalken 37 ist eine kompakt verstellbare Einheit mit den Schar-Teilen des Legeaggregates 4 aufgebaut, die in Pfeilrichtung G' ebenfalls verstellbar ausgeführt werden kann. Ebenso ist vorgesehen, dass zur Zuführung des Düngers 6 unterschiedliche schlauch- und/oder rohrförmige Zuführsysteme 15 in eine Verbindungsbaugruppe 36'zum Injektionsrad 36 hin integriert werden können. Die Steuerung der Düngerzufuhr und der jeweiligen Stellbewegungen E, G, G' erfolgt dabei vorzugsweise über die Steuereinheit 16' (Fig. 6).

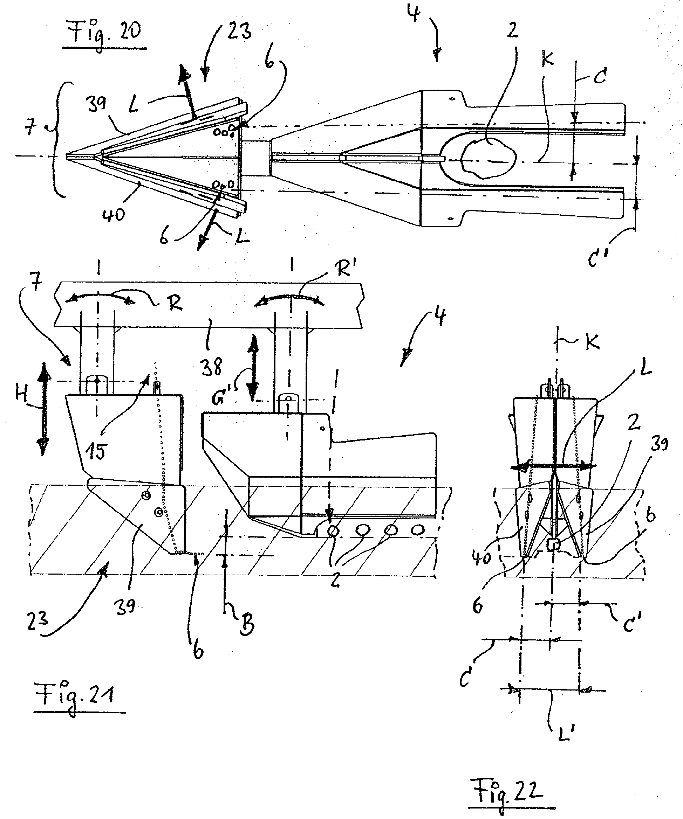

In Fig. 20 bis Fig. 22 ist eine weitere Ausführungsform im Bereich des Einbringwerkzeuges 23 mit einer Austragvorrichtung 7 dargestellt. In zweckmäßiger Ausführung ist dabei ebenfalls eine durch den Querbalken 38 verbundene Baueinheit mit den bodenseitigen Schar-Teilen des Legeaggregates 4 gebildet. Die Bauteile im Bereich des Einbringwerkzeuges 23 sind dabei vorteilhaft so verbunden, dass in einer Hubrichtung H und/oder Schwenkrichtung R jeweilige Einstellungen möglich sind und damit variable Einbaulagen vorgegeben werden können. Mit dieser von Hand oder automatisch erfolgenden Verstellung ist eine jeweilige Variation der Tiefenlage B des Düngers 6 bewirkt. Damit kann beispielsweise entsprechend der zu verlegenden Kartoffelsorte 2 ein größerer oder kleinerer Abstand B - entsprechend der erforderlichen Wuchsunterstützung an den Knollen 2 - eingestellt werden. Die beiden vorderen Schar-Teile 39 und 40 (Fig. 22) können dabei auch in einer Pfeilrichtung L bzw. L' verschiebbar bzw. verschwenkbar so angeordnet werden, dass bei dieser Konstruktion auch die seitliche Abstände C und C' des Düngers 6 zur Knollenlinie K (Fig. 3, Fig. 4) variabel einstellbar sind.

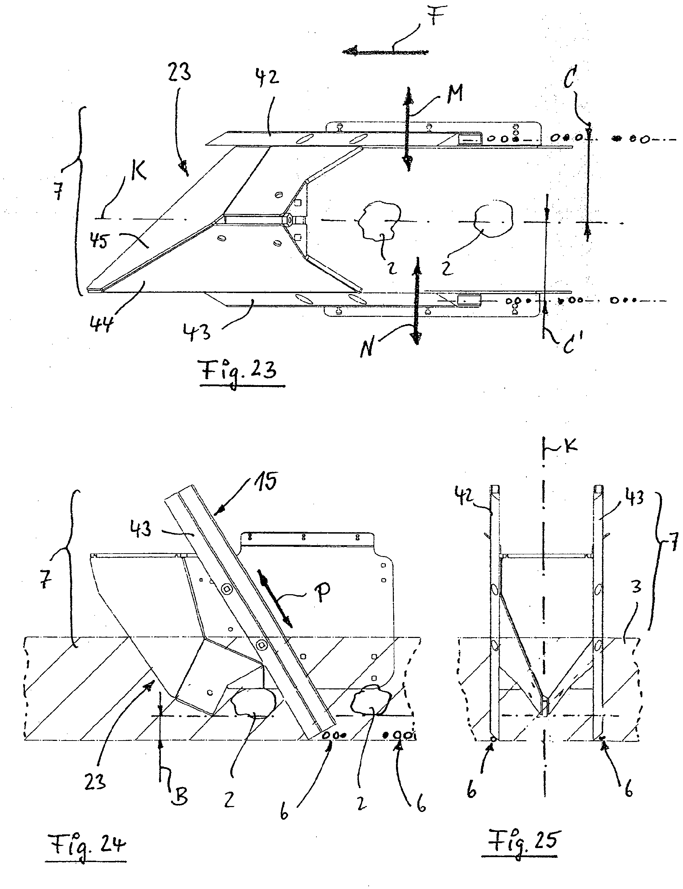

In Fig. 23 bis Fig. 25 ist eine Austragvorrichtung 7 gezeigt, bei der die in Arbeitsrichtung F vorlaufenden Schar-Teile 44, 45 des Einbringwerkzeugs 23 eine asymmetrische Anordnung in Bezug auf die Knollenlinie K aufweisen. Dieses System ist auf eine kompakte Integration der Düngerabgabe in die Baugruppe der Kartoffelschar gerichtet.

Das Zuführsystem 15 ist dabei von jeweiligen seitlichen Füllrohren 42, 43 gebildet. In deren Bereich kann - neben der Tiefeneinstellung - auch eine jeweilige Verstellung in Pfeilrichtung M bzw. Pfeilrichtung N möglich sein. Damit können die Abstände C, C' des Düngers 6 zur jeweiligen Saatknolle 2 variiert werden (ähnlich Fig. 22). Aus Fig. 24 und Fig. 25 wird deutlich, dass bei diesem System der Dünger 6 und die Saatknolle 2 auch gleichebenig angeordnet werden können, da durch eine entsprechende Verstellung in Pfeilrichtung P auch die Position der Düngerabgabe auf die Höhe B = Null einstellbar ist.

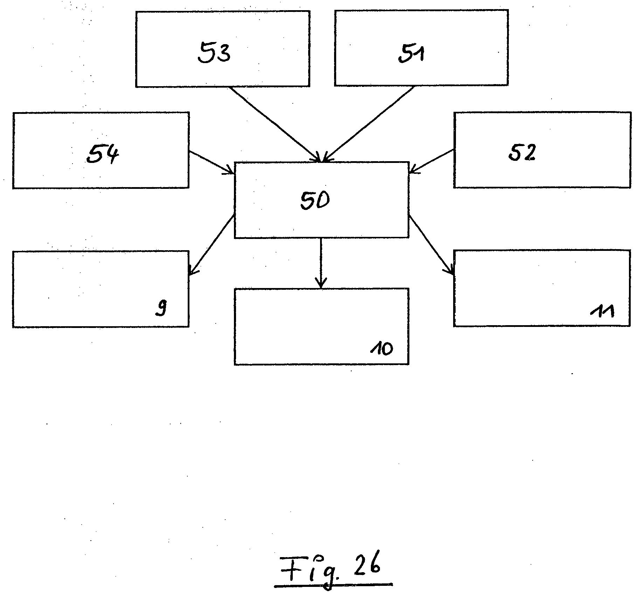

In Fig. 26 ist eine auf den Darstellungen in Fig. 2, Fig. 5 und Fig. 6 basierende erweiterte Systemübersicht des Steuerungskonzeptes gezeigt. Dabei wird deutlich, dass ein zentraler Rechner 50 der Einrichtung 1 über ein Bedienterminal 51 angesteuert wird. Dabei können über ein Lesegerät 52 entsprechende Daten von Karteikarten o. dgl. eingegeben werden. Während des Einsatzes der Einrichtung 1 können über ein GPS-Signal 53 entsprechende Regelungen von Lage und Geschwindigkeit vorgegeben bzw. überwacht werden.

Bei einer Befüllung der Einrichtung 1 mit Saatknollen werden im Bereich einer Behälterwaage 54 entsprechende Messwerte erzeugt, so dass der Füllzustand mittels des Rechners 50 kontrolliert und auch während des Legevorgangs überwacht werden kann. Ausgehend vom Rechner 50 wird auch die jeweilige Dosierung der Düngemittel 13, 14 vorgegeben und überwacht (Fig. 2).

## Patentansprüche

1. Verfahren zur Düngerausbringung im Kartoffelanbau, wobei im Bereich jeweiliger, in Kartoffeldämmen (8, 8', 8") o. dgl. Bodenformen von Agrarflächen (3) einzulegender Saatknollen (2) zumindest ein in Längsrichtung (A) von Kartoffelreihen eine oder mehrere Düngelinie(n) (9, 10, 11) bildender Dünger (6) in flüssigem, gasförmigem oder festem Zustand eingebracht wird, wobei ein zumindest in seiner Zusammensetzung, seiner Menge, seiner Konsistenz und/oder seiner Abstandslage zur Saatknolle (2) variierbarer Dünger (6) teilflächenspezifisch (BW, BW') steuerbar dem Nahbereich von Saatknollen (2) zugeführt wird und wobei der mindestens zwei Düngemittel (13, 14) enthaltene Dünger (6) aus jeweiligen Dosierströmen gemischt wird, dieses Gemisch als ein entsprechend den Bodenrichtwerten (BW, BW') optimierbarer Dünger (6) in mehreren Düngelinien (9, 10, 11) ausgebracht wird und diese in optimierbaren Abständen zur Saatknolle (2) im Kartoffeldamm (8, 8', 8") positioniert werden.

2. Verfahren nach Anspruch 1, **dadurch gekennzeichnet, dass** zumindest phasenweise während eines mit der gesteuerten Ausbringung des Düngers (6) kombinierbaren Verlegevorgangs unterschiedliche Bodenstrukturen und -richtwerte (BW, BW') in Kartoffeldämmen (8, 8', 8") von Agrarflächen (3) berücksichtigt werden.

3. Verfahren nach Anspruch 1 oder 2, **dadurch gekennzeichnet, dass** entsprechend den Bodenstrukturen und -richtwerten (BW, BW') zweier beabstandet zu bearbeitender Agrarflächen (3) nach einer örtlichen Umsetzphase des Systems die Zuführung von Dünger (6) neu eingestellt und über eine GPS-Steuerung beeinflusst wird.

4. Verfahren nach Anspruch 1, **dadurch gekennzeichnet, dass** im Bereich von Kartoffeldämmen (8, 8', 8") einer zu bestellenden Agrarfläche (3) jeweilige unterschiedliche Bodenstrukturen und -richtwerte (BW, BW') permanent erfasst und/oder mittels Vorgabewerten berechnet werden, derart, dass auf dieser Agrarfläche (3) die teilflächenspezifisch gesteuerte Zuführung des Düngers (6) in den Kartoffeldamm (8) vor, während oder nach einer Legephase der Saatknollen (2) erfolgt.

5. Verfahren nach einem der Ansprüche 1 bis 4, **dadurch gekennzeichnet, dass** der Düngerbedarf mittels einer digitalen Ackerflächenkarte und/oder einer Messsonde (17) berechenbar ist und in einer bedarfsgesteuerten Abfolge die Zuführung des Düngers (6) teilflächenspezifisch mit dem Legevorgang kombiniert durchgeführt wird.

6. Verfahren nach einem der Ansprüche 1 bis 5, **dadurch gekennzeichnet, dass** ausgehend von einer jeweils auf der Agrarfläche (3) zu verlegenden Sorte der Saatknollen (2) eine an diese anpassbare Zuführung von Dünger (6) durchgeführt wird.

7. Verfahren nach einem der Ansprüche 1 bis 6, **dadurch gekennzeichnet, dass** die Dosierströme der Düngemittel (13, 14) anhand der Bodenrichtwerte (BW, BW') als bedarfsgerechter Dünger (6) zusammengeführt werden und dieser im Wesentlichen zeitgleich in drei Düngelinien (9, 10, 11) mit variablen Abständen (B, B', C, C', T) zur Knollenlinie (K) in den zumindest einen Kartoffeldamm (8) eingebracht wird.

8. Verfahren nach einem der vorherigen Ansprüche, **dadurch gekennzeichnet, dass** während der Ablage des Düngers (6) in vorausberechenbarer Relation zur Knollenlinie (K) jeweils zwei seitlich parallele Düngelinien (10, 11) und eine parallel sowie vertikal beabstandete Düngelinie (9) im Kartoffeldamm (8) gebildet werden, derart, dass das langzeitige Wachstum der sich im Kartoffeldamm (8, 8', 8") bildenden Ernteknollen zu optimaler Größe und Qualität geführt wird.

9. Verfahren nach einem der vorherigen Ansprüche, **dadurch gekennzeichnet, dass** auf der Agrarfläche im Bereich der vorbereiteten Bodenform zumindest eine Fahrspur gebildet wird und in deren Bereich jeweils randseitig zu den angrenzenden Kartoffelreihen jeweilige Spuren mit vergleichsweise weniger Dünger (6) eingebracht werden.

10. Einrichtung zur Düngerausbringung im Kartoffelanbau, bei der im Bereich eines die Saatknollen (2) dem Ackerboden (3) zuführenden Legeaggregates (4) eine den in jeweiligen Vorratsbehältern (5) bereitstellbaren Dünger (6) in den Bereich einer als Kartoffeldamm (8, 8', 8") ausführbaren Bodenform verlagernde Austragvorrichtung (7) vorgesehen ist, wobei die Austragvorrichtung (7) eine mit zumindest zwei Vorratsbehältern (5, 5') verbindbare Dosiereinheit (12) aufweist und der darin aus zumindest zwei Düngemitteln (13, 14) mischbare Dünger (6) über ein diesen aufteilbar erfassendes Zuführsystem (15) in den Kartoffeldamm (8, 8', 8") überführbar ist, derart, dass mittels einer rechnergestützten Steuereinheit (16') ein direkter Austrag von Düngemittel(n), eine jeweilige Mischung von Düngemitteln (13, 14) und/oder eine jeweilige Mengendosierung des in Düngelinien (9, 10, 11) erfolgenden Düngeraustrags teilflächenspezifisch einstellbar ist/sind.

11. Einrichtung nach Anspruch 10, **dadurch gekennzeichnet, dass** die Dosiereinheit (12) mehrere, den teilflächenspezifisch zusammengesetzten Dünger (6) aus einem Mischer (22) übernehmende Zuführsysteme (15) aufweist.

12. Einrichtung nach Anspruch 10 oder 11, **dadurch gekennzeichnet, dass** das oder die Zuführsysteme (15) mit zumindest einem antreibbaren Werkzeug in Form eines Führungstrichters (24), eines Zellenrades, einer Förderschnecke, einer Förderkette, einer Schöpfeinrichtung, eines Schiebers, einer Pumpe oder eines Ventils versehen ist.

13. Einrichtung nach einem der Ansprüche 10 bis 12 unter Einschluss von Anspruch 11, **dadurch gekennzeichnet, dass** der die Düngemittel (6) aufnehmende Mischer (22) mit einem mechanisch, elektrisch, pneumatisch oder hydraulisch angetriebenen Mischorgan versehen und dieses mit der Steuereinheit (16') verbindbar ist.

14. Einrichtung nach einem der Ansprüche 10 bis 13, **dadurch gekennzeichnet, dass** die im Bodenbereich (3) vor der Formung des Kartoffeldamms (8, 8', 8") wirksame Austragvorrichtung (7) mit einem oder mehreren, den dosierbaren Dünger (6) aufnehmenden und in einer jeweiligen Düngelinie (9, 10, 11) verteilenden Einbringwerkzeug(en) (23) versehen ist.

15. Einrichtung nach Anspruch 14, **dadurch gekennzeichnet, dass** die Austragvorrichtung (7) als jeweiliges Einbringwerkzeug (23) die Bauteile an sich bekannter Furchenzieher nutzt.

16. Einrichtung nach Anspruch 14 oder 15, **dadurch gekennzeichnet, dass** das zumindest eine Einbringwerkzeug (23) in Form eines Schars, eines Zinkens, einer Lanze, eines Rades und/oder einer Scheibe vorgesehen ist.

17. Einrichtung nach einem der Ansprüche 14 bis 16, **dadurch gekennzeichnet, dass** das Einbringwerkzeug (23) und ein Furchenzieher (27) für die Saatknollen (2) im Bereich des Legeaggregates (4) eine Baueinheit bilden.

18. Einrichtung nach einem der Ansprüche 14 bis 17, **dadurch gekennzeichnet, dass** das Einbringwerkzeug (23) in den Bereich des für die Saatknollen (2) vorgesehenen Furchenziehers (27) integrierbar ist, derart, dass Düngerausbringung und Legen der Saatknolle (2) im Wesentlichen zeitgleich ausführbar sind.

19. Einrichtung nach einem der Ansprüche 10 bis 18, **dadurch gekennzeichnet, dass** die Austragvorrichtung (7), das Einbringwerkzeug (23) und/oder das Dünger-Zuführsystem im Bereich ihrer jeweiligen Baugruppen auf jeweils optimal vorgebbare Ablage-Positionen der Düngelinien (9, 10, 11) im Kartoffeldamm (8, 8', 8") mittels zumindest einem mechanischen, elektrischen, hydraulischen und/oder pneumatischen Stellorgan einstellbar ist/sind, wobei wahlweise eine manuelle und/oder automatisch steuerbare Einstellung vorgesehen ist.

20. Einrichtung nach Anspruch 19, **dadurch gekennzeichnet, dass** das Zuführsystem auf die Zusammensetzung und Verteilung des Düngers (6) variabel einstellbar ist, derart, dass entlang einer Düngelinie (9, 10, 11) einbringbare Düngenester in Bezug zur Verlegelinie (K) der Saatknolle (2) mit seitlichem und/oder vertikalem Abstand positionierbar sind.

## Claims

1. Method for spreading fertiliser in potato farming, wherein at least one fertiliser (6) which forms one or more fertiliser lines (9, 10, 11) in the longitudinal direction (A) of rows of potatoes is introduced in liquid, gaseous or solid form in the region of seed tubers (2) to be placed into potato ridges (8, 8', 8") or similar ground formations in areas of agricultural land (3), wherein a fertiliser (6) which can be varied at least in terms of its composition, quantity, consistency and/or its distance from the seed tuber (2) is supplied to the area surrounding seed tubers (2) so as to be controllable in an area-specific manner (BW, BW'), and wherein the fertiliser (6), which contains at least two fertilising agents (13, 14), is mixed together from respective metered flows, said mixture is applied in a plurality of fertiliser lines (9, 10, 11) in the form of a fertiliser (6) that can be optimised according to the ground values (BW, BW'), and said lines are positioned at optimisable distances from the seed tuber (2) in the potato ridge (8, 8', 8").

2. Method according to claim 1, **characterised in that** different ground structures and ground values (BW, BW') in potato ridges (8, 8', 8") in areas of agricultural land (3) are taken into account at least in phases during a planting process that can be combined with the controlled spreading of the fertiliser (6).

3. Method according to either claim 1 or claim 2, **characterised in that**, according to the ground structures and ground values (BW, BW') of two areas of agricultural land (3) to be processed at a distance from one another, following a local changeover phase of the system, the supply of fertiliser (6) is re-adjusted and is influenced by a GPS controller.

4. Method according to claim 1, **characterised in that**, in the region of potato ridges (8, 8', 8") in an area of agricultural land (3) to be tilled, respective, differing ground structures and ground values (BW, BW') are permanently detected and/or calculated by means of default values, such that in this area of agricultural land (3), the supply of the fertiliser (6), which is controlled in an area-specific manner, to the potato ridge (8) takes place before, during or after a phase of planting the seed tubers (2).

5. Method according to any of claims 1 to 4, **characterised in that** the need for fertiliser can be calculated by means of a digital arable land map and/or by means of a measuring probe (17) and, in a needs-based sequence, the fertiliser (6) is supplied in an area-specific manner in combination with the planting process.

6. Method according to any of claims 1 to 5, **characterised in that**, on the basis of a variety of seed tubers (2) to be planted in the area of agricultural land (3) in each case, fertiliser (6) is supplied in a manner adapted to said variety.

7. Method according to any of claims 1 to 6, **characterised in that** the metered flows of the fertilising agents (13, 14) are combined to form a needs-based fertiliser (6) on the basis of the ground values (BW, BW'), and said fertiliser is introduced into the at least one potato ridge (8) at variable distances (B, B', C, C', T) from the lines (K) of tubers substantially simultaneously in three fertiliser lines (9, 10, 11).

8. Method according to any of the preceding claims, **characterised in that**, while depositing the fertiliser (6) in a relationship to the line (K) of tubers that can be calculated in advance, two laterally parallel fertiliser lines (10, 11) and one fertiliser line (9) that is at a spacing both in parallel and vertically are formed in the potato ridge (8), such that the long-term growth of the tuber crops growing in the potato ridge (8, 8', 8") results in optimum size and quality.

9. Method according to any of the preceding claims, **characterised in that** at least one tramline is formed on the area of agricultural land in the region of the prepared ground formation, and in the region of each tramline, respective tracks which have comparatively less fertiliser (6) are made at the edges of the adjacent rows of potatoes.

10. Apparatus for spreading fertiliser in potato farming, in which a discharge device (7) that moves the fertiliser (6), which can be supplied to the respective tanks (5), into the region of a ground formation that may be in the shape of a potato ridge (8, 8', 8") is provided in the region of a planting unit (4) that transports the seed tubers (2) to the soil (3), wherein the discharge device (7) comprises a metering unit (12) that can be connected to at least two tanks (5, 5') and the fertiliser (6) that can be mixed together therein from at least two fertilising agents (13, 14) can be conveyed into the potato ridge (8, 8', 8") by means of a supply system (15) that holds said fertiliser in separate portions, such that a computer-assisted control unit (16') can adjust, in an area-specific manner, the direct discharge of a fertilising agent/fertilising agents, a relevant mixture of fertilising agents (13, 14), and/or relevant metering of the fertiliser that is discharged in fertiliser lines (9, 10, 11).

11. Apparatus according to claim 10, **characterised in that** the metering unit (12) comprises a plurality of supply systems (15) that transfer the fertiliser (6), combined in an area-specific manner, from a mixer (22).

12. Apparatus according to either claim 10 or claim 11, **characterised in that** the supply system(s) (15) is/are provided with at least one drivable tool in the form of a guide hopper (24), a bucket wheel, a screw conveyor, a conveyor chain, a scoop apparatus, a slide, a pump or a valve.

13. Apparatus according to any of claims 10 to 12, with the inclusion of claim 11, **characterised in that** the mixer (22) that receives the fertilising agent (6) can be provided with a mechanically, electrically, pneumatically or hydraulically driven mixing member, and said member can be connected to the control unit (16').

14. Apparatus according to any of claims 10 to 13, **characterised in that** the discharge device (7) that acts in the soil region (3) before the formation of the potato ridge (8, 8', 8") is provided with one or more introduction tools (23) that receive the fertiliser (6) that can be metered and distribute said fertiliser in each of the fertiliser lines (9, 10, 11).

15. Apparatus according to claim 14, **characterised in that** the discharge device (7) uses the components of a furrow opener known per se as the relevant introduction tool (23).

16. Apparatus according to either claim 14 or claim 15, **characterised in that** the at least one introduction tool (23) is provided in the form of a blade, a prong, a lance, a wheel and/or a disc.

17. Apparatus according to any of claims 14 to 16, **characterised in that** the introduction tool (23) and a furrow opener (27) for the seed tubers (2) form a structural unit in the region of the planting unit (4).

18. Apparatus according to any of claims 14 to 17, **characterised in that** the introduction tool (23) can be integrated in the region of the furrow opener (27) provided for the seed tubers (2) such that fertiliser can be spread and the seed tubers (2) can be planted substantially simultaneously.

19. Apparatus according to any of claims 10 to 18, **characterised in that** the discharge device (7), the introduction tool (23) and/or the fertiliser supply system, in the region of the respective assemblies thereof, can be adjusted to respectively optimally definable depositing positions of the fertiliser lines (9, 10, 11) in the potato ridge (8, 8', 8") by means of at least one mechanical, electrical, hydraulic and/or pneumatic adjusting member, with either manual and/or automatically controllable adjustment being provided.

20. Apparatus according to claim 19, **characterised in that** the supply system can be variably adjusted to the composition and distribution of the fertiliser (6) such that fertiliser nests, which can be introduced along a fertiliser line (9, 10, 11), can be positioned relative to the planting line (K) of the seed tuber (2) with lateral and/or vertical spacing.

## Revendications

1. Procédé d'épandage d'engrais dans la culture de la pomme de terre, au moins engrais (6) qui forme une ou plusieurs lignes de fertilisation (9, 10, 11) dans la direction longitudinale (A) de rangées de pommes de terre étant introduit à l'état liquide, gazeux solide dans la zone de tubercules à planter respectifs (2) à insérer dans des digues à pommes de terre (8, 8', 8") des formes de sol analogues de surfaces agraires (3), un engrais qui peut varier au moins en termes de composition, de quantité, de consistance et/ou de distance par rapport au tubercule à planter (2) étant apporté à la zone proche des tubercules à planter (2) de manière commandée spécifiquement à une partie de surface (BW, BW') et l'engrais (6) qui contient au moins deux agents fertilisants (13, 14) étant mélangé à partir de flux de dosage respectifs, ce mélange pouvant être épandu sous forme d'un engrais (6), optimisable selon les valeurs de référence de sol (BW, BW'), suivant plusieurs lignes de fertilisation (9, 10, 11) et celles-ci étant positionnées à des distances optimisables par rapport au tubercule à planter (2) dans la digue à pommes de terre (8, 8', 8").

2. Procédé selon la revendication 1, **caractérisé en ce qu'**au moins des structures de sol et des valeurs de référence de sol (BW, BW') différentes en termes de phase pendant un processus de pose combinable avec l'épandage commandé de l'engrais (6) sont prises en compte dans des digues à pommes de terre (8, 8', 8") de surfaces agraires (3).

3. Procédé selon la revendication 1 ou 2, **caractérisé en ce que**, en fonction des structures de sol et les valeurs de référence de sol (BW, BW') de deux surfaces agraires espacées (3) à traiter, l'apport d'engrais (6) est nouveau réglé et est influencé par une commande GPS selon une phase de relocalisation du système.

4. Procédé selon la revendication 1, **caractérisé en ce que**, dans la zone des digues à pommes de terre (8, 8', 8") d'une surface agraire à cultiver (3), différentes structures de sols et valeurs de référence de sol (BW, BW') respectives sont en permanence détectées et/ou calculées au moyen de valeurs prescrites de telle sorte que, sur cette surface agraire (3), l'apport d'engrais (6), commandé de manière spécifique à la partie de surface, à la digue à pommes de terre (8) est effectué avant, pendant ou après la phase de pose des tubercules à planter (2).

5. Procédé selon l'une des revendications 1 à 4, **caractérisé en ce que** le besoin d'engrais peut être calculé au moyen d'une carte de surface agraire numérique et/ou une sonde de mesure (17) et l'apport d'engrais (6) est effectué de manière spécifique à la partie de surface en combinaison avec le processus de pose dans une séquence commandée selon le besoin.

6. Procédé selon l'une des revendications 1 à 5, **caractérisé en ce que**, à partir d'une variété de tubercule à planter (2) qui doit être posée sur la surface agraire (3), on effectue un apport d'engrais (6) adaptable à cette variété.

7. Procédé selon l'une des revendications 1 à 6, **caractérisé en ce que** les flux de dosage des agents fertilisants (13, 14) sont fusionnés sur la base des valeurs de référence de sol (BW, BW') sous la forme d'engrais (6) conforme au besoin et celui-ci est inséré sensiblement en même temps dans l'au moins une digue à pommes de terre (8) en trois lignes de fertilisation (9, 10, 11) à des distances variables (B, B', C, C', T) de la ligne de tubercules (K).

8. Procédé selon l'une des revendications précédentes, **caractérisé en ce que**, pendant le dépôt de l'engrais (6) dans une relation calculable à l'avance par rapport à la ligne de tubercules (K), deux lignes de fertilisation (10, 11) latéralement parallèles et une ligne de fertilisation (9) espacée parallèlement et verticalement sont à chaque fois formées dans la digue à pommes de terre (8) de telle sorte que la croissance à long terme des tubercules à récolter qui se forment dans la digue à pomme de terre (8, 8', 8") est effectuée à une taille et une qualité optimales.

9. Procédé selon l'une des revendications précédentes, **caractérisé en ce qu'**au moins une piste de roulement est formée sur la surface agraire dans la zone de la forme de sol préparée et des pistes respectives comportant relativement moins d'engrais (6) sont introduites dans la zone de la piste de roulement au niveau de bord en lisière des rangées de pommes de terre adjacentes.

10. Dispositif d'épandage d'engrais dans la culture de la pomme de terre, dans lequel il est prévu dans la zone d'une unité de pose (4), apportant les tubercules à planter (2) au sol agraire (3), un dispositif de déversement qui transporte l'engrais (6), disponible dans des récipients de stockage respectifs (5), jusque dans la zone d'une forme de sol pouvant être réalisée comme une digue à pommes de terre (8, 8', 8"), le dispositif de déversement (7) comportant une unité de dosage (12) pouvant être reliée à au moins deux récipients de stockage (5, 5') et l'engrais (6) qui peut être obtenu par mélange à partir d'au moins deux agents fertilisants (13, 14) pouvant être transféré dans la digue à pommes de terre (8, 8', 8") par le biais d'un système d'apport (15) collectant celui-ci de manière dosée de sorte qu'un déversement direct du ou des agents fertilisants, un mélange respectif d'agents fertilisants (13, 14) et/ou un dosage quantitatif respectif du déversement d'engrais effectué en lignes de fertilisation (9, 10, 11) peuvent être réglés de manière spécifique à la partie de surface au moyen d'une unité de commande (16') assistée par ordinateur.

11. Dispositif selon la revendication 10, **caractérisé en ce que** l'unité de dosage (12) comporte une pluralité de systèmes d'apport (15) transférant l'engrais (6) composé de manière spécifique à la partie de surface à partir d'un mélangeur (22) .

12. Dispositif selon la revendication 10 ou 11, **caractérisé en ce que** le ou les systèmes d'apport (15) sont pourvus d'au moins un outil entraînable se présentant sous la forme d'un entonnoir de guidage (24), d'une roue à alvéoles, d'une vis transporteuse, d'une chaîne transporteuse, d'un moyen à godets, d'un poussoir, d'une pompe ou d'une vanne.

13. Dispositif selon l'une des revendications 10 à 12, incluant la revendication 11, **caractérisé en ce que** le mélangeur (22), recevant les agents fertilisants (6), est pourvu d'un élément de mélange à entraînement mécanique, électrique, pneumatique ou hydraulique et celui-ci peut être relié à l'unité de commande (16').

14. Dispositif selon l'une des revendications 10 à 13, **caractérisé en ce que** le dispositif de déversement (7) actif dans la zone de sol (3) avant de former la digue à pommes de terre (8, 8', 8") est pourvu d'un ou de plusieurs outils d'insertion (23) recevant l'engrais dosée (6) et le distribuant dans une ligne de fertilisation respective (9, 10, 11).

15. Dispositif selon la revendication 14, **caractérisé en ce que** le dispositif de déversement (7) utilise comme outil d'insertion respectif (23) les composants de sillonneuse connue en soi.

16. Dispositif selon la revendication 14 ou 15, **caractérisé en ce que** l'au moins un outil d'insertion (23) est prévu sous la forme d'un soc, d'une dent, d'une lance, d'une roue et/ou d'un disque.

17. Dispositif selon l'une des revendications 14 à 16, **caractérisé en ce que** l'outil d'insertion (23) et une sillonneuse (27) destinés aux tubercules à planter (2) forment une unité structurelle dans la zone de l'unité de pose (4).

18. Dispositif selon l'une des revendications 14 à 17, **caractérisé en ce que** l'outil d'insertion (23) peut être intégré dans la zone de la sillonneuse (27) destinée aux tubercules à planter (2) de telle sorte que l'épandage d'engrais et la pose de la tubercule à planter (2) se font sensiblement en même temps.

19. Dispositif selon l'une des revendications 10 à 18, **caractérisé en ce que** le dispositif de déversement (7), l'outil d'insertion (23) et/ou le système d'apport d'engrais dans la zone de leurs modules respectifs à des positions de dépôt, prédéterminables de manière optimale, des lignes de fertilisation (9, 10, 11) dans la digue à pommes de terre (8, 8', 8") est réglable au moyen d'au moins un élément de réglage mécanique, électrique, hydraulique et/ou pneumatique, un réglage manuel et/ou automatique étant facultativement prévu.

20. Dispositif selon la revendication 19, **caractérisé en ce que** le système d'apport est réglable de manière variable sur la base de la composition et de la distribution de l'engrais (6) de telle sorte que des nids de fertilisation insérables le long d'une ligne de fertilisation (9, 10, 11) peuvent être positionné avec un espacement latéral et/ou vertical par rapport à la ligne de pose (K) de la tubercule à planter (2).
